# EUROPÄISCHE PATENTANMELDUNG

(11) **EP 4 039 837 A1**
(43) Veröffentlichungstag der Anmeldung: **10.08.2022**
(21) Anmeldenummer: 21154929.0
(22) Anmeldetag: 03.02.2021
(51) Int. Cl.: C22B 3/10, C22B 3/46, C22B 11/00

(54) **VERFAHREN ZUR REDUKTIVEN GEWINNUNG VON IRIDIUM, RHODIUM UND/ODER RUTHENIUM**

(71) Anmelder: Heraeus Deutschland GmbH & Co. KG, 63450 Hanau (DE)
(72) Erfinder: OTT, Sybille, 63450 Hanau (DE); DR. RÖHLICH, Christoph, 63450 Hanau (DE)
(74) Vertreter: Heraeus IP

(57) **Zusammenfassung**

Verfahren zur reduktiven Gewinnung von elementarem Edelmetall aus einer sauren wässrigen edelmetallhaltigen Lösung, umfassend das Zugeben von Zink und/oder Zinn umfassendem nichtedlem Metall zur sauren wässrigen edelmetallhaltigen Lösung unter Bildung einer Reaktionsmischung, wobei das gelöste Edelmetall Iridium, Rhodium und/oder Ruthenium umfasst, wobei die Zugabe des nichtedlen Metalls in einem überstöchiometrischen Mengenanteil erfolgt, und wobei der pH-Wert der sauren wässrigen edelmetallhaltigen Lösung vor der Zugabe des nichtedlen Metalls im Bereich von +0,8 bis +3,0 liegt und auch in der Reaktionsmischung in diesem Bereich gehalten wird.

## Beschreibung

Die Erfindung betrifft ein Verfahren zur reduktiven Gewinnung von Iridium, Rhodium und/oder Ruthenium in metallischer Form aus einer sauren wässrigen Lösung.

Die reduktive Gewinnung von elementarem Edelmetall aus stark sauren, beispielsweise einen pH-Wert von ≤ 0 aufweisenden, wässrigen edelmetallhaltigen Lösungen durch Zugabe von nichtedlem Metall zu einer solchen Lösung ist dem Fachmann als sogenannte Edelmetallzementation bekannt.

Im Rahmen eines nasschemischen Edelmetallrecyclings oder einer nasschemischen Edelmetallraffination wird häufig zunächst eine Oxidation des Edelmetalls in Gegenwart von Salzsäure durchgeführt, wobei das im Zuge dessen wasserlöslich gemachte Edelmetall in wässrige Lösung geht. Üblicherweise folgt danach eine Abtrennung des oder der betreffenden Edelmetalle durch Fällung derselben in Form schwerlöslicher Chloridokomplexe. Dabei fallen saure Mutterlaugen mit einem zwar geringen, jedoch rückgewinnungswürdigen wässrig gelösten Edelmetallanteil an. Die weitgehende Rückgewinnung dieses in saurer, insbesondere salzsaurer wässriger Lösung befindlichen Edelmetallanteils wird reduktiv verwirklicht, beispielsweise durch Zusatz von Eisenpulver als Reduktionsmittel. Im Falle von Iridium, aber auch bei Rhodium und Ruthenium besteht die Schwierigkeit, diese Edelmetalle innerhalb eines prozessüblichen Zeitrahmens, also mit vertretbarer Dauer bei zugleich hoher Rückgewinnungsquote zurückzugewinnen. Als Kompromiss wird in der Praxis insofern ein sowohl ökonomisch als auch ökologisch unbefriedigender Verlust an diesen Edelmetallen in Kauf genommen, d.h. ein gewisser Anteil an Iridium, aber auch an Rhodium bzw. Ruthenium geht mit dem Abwasser für eine gezielte Rückgewinnung verloren.

Aufgabe der Erfindung war es, ein verbessertes Zementationsverfahren mit hoher Retention von Iridium, Rhodium bzw. Ruthenium zu finden, ohne unvertretbar lange Prozessdauern in Kauf nehmen zu müssen.

Die Aufgabe wird gelöst durch ein Verfahren zur reduktiven Gewinnung von elementarem, also metallischem Edelmetall aus einer sauren wässrigen gelöstes Edelmetall umfassenden Lösung, nachfolgend auch kurz als "saure wässrige edelmetallhaltige Lösung" bezeichnet. Das Verfahren umfasst das Zugeben von Zink und/oder Zinn umfassendem nichtedlem Metall zur sauren wässrigen edelmetallhaltigen Lösung unter Bildung einer Reaktionsmischung. Das gelöste Edelmetall umfasst Iridium, Rhodium und/oder Ruthenium. Die Zugabe des nichtedlen Metalls erfolgt in einem Mengenanteil, der den zur Reduktion des von der sauren wässrigen edelmetallhaltigen Lösung umfassten gelösten Edelmetalls zum elementaren Metall stöchiometrisch notwendigen Mengenanteil übersteigt. Der pH-Wert der sauren wässrigen edelmetallhaltigen Lösung, d.h. ihr pH-Wert vor Beginn der Zugabe des nichtedlen Metalls liegt im Bereich von +0,8 bis +3,0 und wird auch in der Reaktionsmischung in diesem Bereich gehalten.

Im erfindungsgemäßen Verfahren wird nichtedles Metall zu der sauren wässrigen edelmetallhaltigen Lösung zugegeben und damit eine durch Reduktion erfolgende Zementation des Iridiums, Rhodiums und/oder Rutheniums sowie gegebenenfalls weiterer von der sauren wässrigen edelmetallhaltigen Lösung umfasster gelöster Edelmetalle bewirkt.

Die saure wässrige edelmetallhaltige Lösung kann insbesondere eine im Rahmen eines nasschemischen Edelmetallrecyclings oder einer nasschemischen Edelmetallraffination anfallende Lösung oder Mutterlauge sein. Insbesondere kann die saure wässrige edelmetallhaltige Lösung dabei einem unter Oxidation von Edelmetall in Gegenwart von Salzsäure durchgeführten nasschemischen Edelmetallrecycling oder einer unter Oxidation von Edelmetall in Gegenwart von Salzsäure durchgeführten nasschemischen Edelmetallraffination entstammen. Die saure wässrige edelmetallhaltige Lösung kann aber auch einer oder - als Gemisch saurer wässriger edelmetallhaltiger Lösungen - mehreren anderen Quellen entstammen; beispielsweise kann es sich handeln um der Edelmetallbearbeitung entstammende Lösungen wie beispielsweise entsprechende Beizlösungen, Synthesen edelmetallhaltiger Verbindungen entstammende Lösungen, galvanische Badlösungen, Elektrolytlösungen aus elektrochemischen Prozessen, Spülwässern aus Anlagenreinigungen oder aus lonenaustauschprozessen.

Ein wichtiges Merkmal der sauren wässrigen edelmetallhaltigen Lösung als auch der sauren wässrigen Phase ist der vergleichsweise hohe pH-Wert im Bereich von +0,8 bis +3,0, bevorzugt im Bereich von +1,0 bis +2,5. Die saure wässrige edelmetallhaltige Lösung kann diesen pH-Wert schon ursprünglich aufweisen oder ausgehend von einem ursprünglich niedrigeren oder sogar negativen pH-Wert darauf eingestellt werden oder darauf eingestellt worden sein, beispielsweise durch Zugabe von Base, wie Alkalihydroxid. Der pH-Wert im Bereich von +0,8 bis +3,0 entspringt der in der sauren wässrigen edelmetallhaltigen Lösung enthaltenen Säure. Die Säure umfasst üblicherweise Salzsäure, entweder als einzige Säure oder in Kombination mit einer oder mehreren anderen anorganischen Säuren, speziell in Kombination mit Salpetersäure.

Wie gesagt, auch in der Reaktionsmischung wird der pH-Wert im Bereich von +0,8 bis +3,0 und bevorzugt im Bereich von +1,0 bis +2,5 gehalten, d.h. während der Edelmetallzementation. Anders ausgedrückt, während der Reduktionsreaktion, d.h. über die gesamte Zugabedauer des nichtedlen Metalls plus einer danach gewährten Reaktionsdauer, wird der pH-Wert in der Reaktionsmischung im Bereich von +0,8 bis +3,0 und bevorzugt im Bereich von +1,0 bis +2,5 gehalten, beispielsweise durch permanente oder in zweckmäßig gewählten Zeitabständen erfolgende pH-Wert-Messung gekoppelt mit einem gegebenenfalls notwendigen Zu- bzw. Nachdosieren von Säure, insbesondere Salzsäure. Das Zu- bzw. Nachdosieren von Säure kann notwendig werden infolge Säureverbrauch bei der unter Wasserstofffreisetzung verlaufenden Reaktion von Säure mit dem zugegebenen nichtedlen Metall. In zweckmäßig gewählten Zeitabständen erfolgende pH-Wert-Messungen sowie gekoppelt damit gegebenenfalls notwendige pH-Wert-Anpassungen können beispielsweise in gleichmäßigen kurzen Zeitabständen, beispielsweise in 10- bis 15-Minutenabständen erfolgen. Auf diese Weise kann gewährleistet werden, dass der Ist-pH-Wert selbst bei eventuellen den pH-Sollbereich kurzfristig verlassenden Schwankungen nur in unschädlicher Weise vom innerhalb des Bereichs von +0,8 bis +3,0 festgelegten Soll-pH-Wert abweicht.

Die Konzentration des gelöst vorliegenden Iridiums, Rhodiums und/oder Rutheniums in der sauren wässrigen edelmetallhaltigen Lösung kann beispielsweise im Bereich von 30 bis 10000 mg pro Liter oder beispielsweise auch von nur 30 bis 5000 mg pro Liter liegen. Für den Fachmann ist klar, dass es sich hierbei um die Konzentration vor Beginn der Reduktion handelt, d.h. vor Zugabe des nichtedlen Metalls. Die Konzentration sinkt dann mit dessen fortschreitender wiederholter Zugabe und fortschreitender Reduktion respektive fortschreitendem Zementationsfortschritt in der sauren wässrigen Phase der Reaktionsmischung ab.

Das gelöst vorliegende Edelmetall umfasst Iridium, Rhodium und/oder Ruthenium, und es kann auch ein oder mehrere andere Edelmetalle wie z.B. Gold, Palladium, Platin, Osmium und Silber umfassen. Das gelöst vorliegende Edelmetall kann hingegen auch aus Iridium, Rhodium und/oder Ruthenium bestehen. Die Vorteile des erfindungsgemäßen Verfahrens zeigen sich besonders in Bezug auf Iridium bzw. dessen Gewinnung oder Rückgewinnung; insofern umfasst das gelöst vorliegende Edelmetall bevorzugt insbesondere Iridium oder besteht daraus.

Das gelöst vorliegende Edelmetall kann insbesondere im Wesentlichen als Chloridokomplex in der sauren wässrigen edelmetallhaltigen Lösung vorliegen. "Chloridokomplex" bedeutet dabei Hexachloridokomplex oder mit einem oder bis zu fünf Chloridoliganden komplexiertes Edelmetall, wobei das Edelmetall zugleich auch mit anderen, im sauren wässrigen Milieu stabilen Komplexliganden komplexiert sein kann. Als Beispiele für andere, im sauren wässrigen Milieu stabile Komplexliganden sind dabei insbesondere Wasser selbst und Chelatbildner zu nennen. Basische Chelatbildner wie beispielsweise DETA (Diethylentriamin) liegen dabei selbstverständlich in protonierter Form vor. Der Ausdruck "im Wesentlichen als Chloridokomplex" bedeutet, dass gegebenenfalls ein kleiner Teil, beispielsweise bis zu 1 mol-% des gelöst vorliegenden Edelmetalls anders als als Chloridokomplex vorliegen kann.

Neben Wasser, gelöstem Edelmetall und Säure kann die saure wässrige edelmetallhaltige Lösung auch andere gelöste Inhaltsstoffe enthalten. Beispiele umfassen gelöstes Nichtedelmetall sowie freie zur Komplex- oder Chelatbildung befähigte Liganden wie beispielsweise das vorerwähnte allerdings protoniert vorliegende DETA.

Wie schon gesagt, wird im erfindungsgemäßen Verfahren nichtedles, Zink und/oder Zinn umfassendes Metall zu der sauren wässrigen edelmetallhaltigen Lösung zugegeben. Zink ist dabei gegenüber Zinn bevorzugt. Das nichtedle Metall kann neben Zink und/oder Zinn auch anderes nichtedles Metall, insbesondere Eisen umfassen. Das nichtedle Metall kann beispielsweise 20 bis 100 Gew.-% (Gewichts-%) Zink und/oder Zinn umfassen. Bevorzugt umfasst es 40 bis 100 Gew.-%, insbesondere 80 bis 100 Gew.-% Zink und/oder Zinn. Speziell bevorzugt besteht das zugegebene nichtedle Metall aus Zink und/oder Zinn.

Das nichtedle Metall hat bevorzugt die Form von Pulver, Spänen und/oder Granalien. Bevorzugt sind Pulver, besonders solche mit absoluten Korngrößen beispielsweise im Bereich von 10 µm bis 1,5 mm, insbesondere im Bereich von 10 bis 70 µm.

Die Zugabe des nichtedlen Metalls erfolgt überstöchiometrisch in dem Sinne, dass es in einem Mengenanteil zugegeben wird, der den zur Reduktion des von der sauren wässrigen edelmetallhaltigen Lösung umfassten gelösten Edelmetalls zum elementaren Metall stöchiometrisch notwendigen Mengenanteil übersteigt. Beispielsweise kann mit einem 5- bis 100-fachen Überschuss an nichtedlem Metall gearbeitet werden.

Die Durchführung des erfindungsgemäßen Verfahrens erfordert eine zeitliche Größenordnung beispielsweise von 3 bis 48 Stunden, bevorzugt 6 bis 24 Stunden, insbesondere 6 bis 12 Stunden und umfasst die Reduktionsreaktion oder Edelmetallzementation über die gesamte Zugabedauer des nichtedlen Metalls plus einer danach gewährten Reaktionsdauer von beispielsweise einer Stunde, bevor das reduktiv gewonnene Edelmetall im nachfolgenden Schritt aus der Reaktionsmischung abgetrennt werden kann. Die eigentliche Zugabe des nichtedlen Metalls erfolgt bevorzugt gleichmäßig und sie kann über einen Zeitraum von beispielsweise 2 bis 47 Stunden andauern. Die gleichmäßige Zugabe kann beispielsweise kontinuierlich nach einem der Funktion einer Sanduhr ähnlichen Rieselprinzip erfolgen oder in kleinen gleichmäßigen Portionen jeweils in gleichmäßigen Zeitabschnitten, beispielsweise in 10-bis 15-Minutenabständen. Die Zugabe bzw. der dadurch in Gang gesetzte Reduktions- und Zementationsprozess wird zweckmäßigerweise solange betrieben, bis die Edelmetallzementation soweit nachgelassen hat und fortgeschritten ist, dass ein Weiterprozessieren wirtschaftlich nicht mehr sinnvoll erscheint.

Die Temperatur der Reaktionsmischung aus der sauren wässrigen edelmetallhaltigen Lösung und dem zugegebenen nichtedlen Metall liegt zweckmäßig im Bereich von beispielsweise 55 bis 90 °C, bevorzugt 70 bis 85 °C. Mit anderen Worten, die Reaktionstemperatur liegt zweckmäßig im Bereich von beispielsweise 55 bis 90 °C, bevorzugt 70 bis 85 °C.

Während des Zugabezeitraums und danach wird die saure wässrige edelmetallhaltige Lösung bzw. die Reaktionsmischung zweckmäßigerweise durchmischt, beispielsweise gerührt.

Das durch Reduktion gebildete metallische Iridium, Rhodium und/oder Ruthenium fällt als Niederschlag aus und kann abgetrennt werden, beispielsweise durch Filtration. Zweckmäßigerweise wartet man mit dem Abtrennen, bis das nichtedle Metall im Wesentlichen oder vollständig aufgelöst worden ist. Dies kann beispielsweise während der nach der letzten Zugabe des nichtedlen Metalls gewährten Reaktionsdauer geschehen.

Das erfindungsgemäße Verfahren erlaubt eine Gewinnung von Iridium, Rhodium und/oder Ruthenium mit hoher Retention und ohne unerwünscht und unüblich lange Prozessdauern in Kauf nehmen zu müssen.

### Beispiele

### Allgemeine Verfahrensweise:

Eine salzsaure wässrige edelmetallhaltige Lösung wurde gegebenenfalls mit 17 M NaOH auf einen höheren als ihren ursprünglichen pH-Wert, d.h. auf den angegebenen Soll-pH-Wert eingestellt. Im Anschluss wurde die Temperatur der Lösung auf den angegebenen Wert erhöht und unter Rühren mit der Zugabe von Reduktionsmittel in Form von Eisen-, Zink- oder ZinnPulver in kleinen gleichmäßigen Portionen (Spatelspitze) begonnen. Die insgesamt jeweils mindestens 10-fach überstöchiometrische Zugabe des Metallpulvers erfolgte alle 15 Minuten für den angegebenen Zeitraum. Während der Edelmetallzementation wurde der pH-Wert kontinuierlich kontrolliert und mit 10 M HCl immer wieder auf den gewünschten pH-Wert abgesenkt, da der pH-Wert mit fortschreitender Zugabe des Metallpulvers immer wieder anstieg. Nach der letzten Zugabe des Metallpulvers wurde noch eine 1 Stunde nachgerührt und dann absetzen gelassen. Die erkaltete Lösung wurde abfiltriert und zur Analyse gegeben.

### Beispiel 1:

500 ml einer salzsauren Lösung mit einem ursprünglichen pH-Wert von -0,8 und mit einem Iridiumgehalt von 24 mg Ir pro Liter, einem Rhodiumgehalt von 31 mg Rh pro Liter und einem Rutheniumgehalt von 1781 mg Ru pro Liter wurden gemäß der allgemeinen Verfahrensvorschrift bei einem Soll-pH-Wert von +1,0 bei einer Temperatur von 85 °C für insgesamt 7 Stunden behandelt.

| Reduktionsmittel | Ausbeute Iridium in mg | Ausbeute Rhodium in mg | Ausbeute Ruthenium in mg |
|---|---|---|---|
| Eisenpulver | 2,6 | 3,5 | 17,9 |
| Zinkpulver | 6,1 | 10,1 | 373,6 |
| Zinnpulver | 5,7 | 6,6 | 284,7 |

### Beispiel 2:

200 ml einer salzsauren Lösung mit einem ursprünglichen pH-Wert von -0,8 und mit einem Iridiumgehalt von 91 mg Ir pro Liter wurden gemäß der allgemeinen Verfahrensvorschrift beim angegebenen Soll-pH-Wert und bei einer Temperatur von 85 °C für insgesamt 7 Stunden mit Zinkpulver (Zugabe des Zinkpulvers über 6 Stunden plus 1 Stunde Nachreaktion) behandelt.

| pH-Wert | Ausbeute Iridium in mg |
|---|---|
| +1,0 | 17,40 |
| +3,0 | 15,54 |

### Beispiel 3:

500 ml einer salzsauren Lösung mit einem ursprünglichen pH-Wert von -0,9 und mit einem Iridiumgehalt von 100 mg Ir pro Liter wurden gemäß der allgemeinen Verfahrensvorschrift beim angegebenen pH-Wert und bei einer Temperatur von 85 °C für insgesamt 3 Stunden mit Zinkpulver (Zugabe des Zinkpulvers über 2 Stunden plus 1 Stunde Nachreaktion) behandelt.

| pH-Wert | Ausbeute Iridium in mg |
|---|---|
| -0,9 | 12,56 |
| +1,0 | 38,98 |

### Beispiel 4:

200 ml einer salzsauren Lösung mit einem ursprünglichen pH-Wert von -0,8 und mit einem Iridiumgehalt von 94 mg Ir pro Liter wurden gemäß der allgemeinen Verfahrensvorschrift bei einem Soll-pH-Wert von +1,0 und bei einer Temperatur von 85 °C durch über den angegebenen Zeitraum erfolgende Zugabe von Zinkpulver behandelt.

| Zugabedauer | Ausbeute Iridium in mg |
|---|---|
| 2 Stunden | 13,47 |
| 6 Stunden | 15,14 |

### Beispiel 5:

200 ml einer salzsauren Lösung mit einem ursprünglichen pH-Wert von -0,8 und mit einem Iridiumgehalt von 94 mg Ir pro Liter wurden gemäß der allgemeinen Verfahrensvorschrift bei einem Soll-pH-Wert von +1,0 für insgesamt 7 Stunden mit Zinkpulver (Zugabe des Zinkpulvers über 6 Stunden plus 1 Stunde Nachreaktion) bei der angegebenen Temperatur behandelt.

| Temperatur | Ausbeute Iridium in mg |
|---|---|
| 55 °C | 14,12 |
| 85 °C | 15,14 |

## Patentansprüche

1. Verfahren zur reduktiven Gewinnung von elementarem Edelmetall aus einer sauren wässrigen gelöstes Edelmetall umfassenden Lösung, umfassend das Zugeben von nichtedlem Metall zur sauren wässrigen gelöstes Edelmetall umfassenden Lösung unter Bildung einer Reaktionsmischung,
wobei das gelöste Edelmetall Iridium, Rhodium und/oder Ruthenium umfasst,
wobei das nichtedle Metall Zink und/oder Zinn umfasst,
wobei die Zugabe des nichtedlen Metalls in einem Mengenanteil erfolgt, der den zur Reduktion des von der sauren wässrigen gelöstes Edelmetall umfassenden Lösung umfassten gelösten Edelmetalls zum elementaren Metall stöchiometrisch notwendigen Mengenanteil übersteigt, und
wobei der pH-Wert der sauren wässrigen gelöstes Edelmetall umfassenden Lösung vor der Zugabe des nichtedlen Metalls im Bereich von +0,8 bis +3,0 liegt und auch in der Reaktionsmischung in diesem Bereich gehalten wird.

2. Verfahren nach Anspruch 1, wobei die saure wässrige gelöstes Edelmetall umfassende Lösung eine im Rahmen eines nasschemischen Edelmetallrecyclings oder einer nasschemischen Edelmetallraffination anfallende Lösung oder Mutterlauge ist.

3. Verfahren nach Anspruch 1 oder 2, wobei die saure wässrige gelöstes Edelmetall umfassende Lösung einem unter Oxidation von Edelmetall in Gegenwart von Salzsäure durchgeführten nasschemischen Edelmetallrecycling oder einer unter Oxidation von Edelmetall in Gegenwart von Salzsäure durchgeführten nasschemischen Edelmetallraffination entstammt.

4. Verfahren nach Anspruch 1, wobei die saure wässrige gelöstes Edelmetall umfassende Lösung eine Lösung oder ein Gemisch mehrerer Lösungen ist ausgewählt aus der Gruppe bestehend aus der Edelmetallbearbeitung entstammenden Beizlösungen, Synthesen edelmetallhaltiger Verbindungen entstammenden Lösungen, galvanischen Badlösungen, Elektrolytlösungen aus elektrochemischen Prozessen, Spülwässern aus Anlagenreinigungen und Spülwässern aus Ionenaustauschprozessen.

5. Verfahren nach einem der vorhergehenden Ansprüche, wobei der pH-Wert im Bereich von +1,0 bis +2,5 liegt.

6. Verfahren nach einem der vorhergehenden Ansprüche, wobei die saure wässrige gelöstes Edelmetall umfassende Lösung Salzsäure als einzige Säure oder in Kombination mit einer oder mehreren anderen anorganischen Säuren umfasst.

7. Verfahren nach einem der vorhergehenden Ansprüche, wobei die Konzentration des gelöst vorliegenden Iridiums, Rhodiums und/oder Rutheniums in der sauren wässrigen gelöstes Edelmetall umfassenden Lösung vor Beginn der Zugabe des nichtedlen Metalls im Bereich von 30 bis 10000 mg pro Liter liegt.

8. Verfahren nach einem der vorhergehenden Ansprüche, wobei das gelöst vorliegende Edelmetall neben Iridium, Rhodium und/oder Ruthenium ein oder mehrere andere Edelmetalle umfasst oder aus Iridium, Rhodium und/oder Ruthenium besteht.

9. Verfahren nach einem der vorhergehenden Ansprüche, wobei das nichtedle Metall die Form von Pulver, Spänen und/oder Granalien hat.

10. Verfahren nach einem der vorhergehenden Ansprüche, wobei das nichtedle Metall neben Zink und/oder Zinn auch anderes nichtedles Metall umfassen kann.

11. Verfahren nach einem der vorhergehenden Ansprüche, wobei das nichtedle Metall 20 bis 100 Gew.-% Zink und/oder Zinn umfasst.

12. Verfahren nach einem der vorhergehenden Ansprüche, wobei mit einem 5- bis 100-fachen stöchiometrischen Überschuss an nichtedlem Metall gearbeitet wird.

13. Verfahren nach einem der vorhergehenden Ansprüche, wobei die Zugabe des nichtedlen Metalls gleichmäßig erfolgt.

14. Verfahren nach einem der vorhergehenden Ansprüche, wobei die Zugabe des nichtedlen Metalls über einen Zeitraum von 2 bis 47 Stunden erfolgt.

15. Verfahren nach einem der vorhergehenden Ansprüche, wobei die Temperatur der Reaktionsmischung aus der sauren wässrigen gelöstes Edelmetall umfassenden Lösung und dem zugegebenen nichtedlen Metall im Bereich von 55 bis 90 °C liegt.
